# EUROPEAN PATENT SPECIFICATION

(11) **EP 2 506 746 B1**
(45) Date of publication and mention of the grant of the patent: **22.04.2015**
(21) Application number: 10784778.2
(22) Date of filing: 25.11.2010
(51) Int. Cl.: A47J 31/52

(54) **BEVERAGE PREPARATION MACHINE COMPRISING A CARD READING ARRANGEMENT**
GETRÄNKEHERSTELLUNGSMASCHINE MIT EINER KARTENLESEANORDNUNG
MACHINE DE PRÉPARATION DE BOISSONS COMPRENANT UN AGENCEMENT DE LECTURE DE CARTE

(30) Priority: 02.12.2009 EP 09177731
(43) Date of publication of application: 10.10.2012
(73) Proprietor: Nestec S.A., 1800 Vevey (CH)
(72) Inventor: AGON, Fabien Ludovic, CH-1897 Le Bouveret (CH); DELBREIL, Marc, CH-1630 Bulle (CH)
(74) Representative: Sivier, Damien
(86) International application number: PCT/EP2010/068180
(87) International publication number: WO 2011/067156

(56) References cited:
- EP-A1- 0 586 330
- EP-A2- 1 491 121
- WO-A2-01/12039
- DE-U1-202007 002 205

## Description

### Field of the Invention

The field of the invention relates to a beverage preparation machine comprising a card reading arrangement as well as to program stored on a memory device and executable by a control unit (21) of a beverage preparation machine.

For the purpose of the present description, a "beverage" is meant to include any liquid food, such as tea, coffee, hot or cold chocolate, milk, soup, baby food or the like. A "capsule" is meant to include any pre-portioned beverage ingredient within an enclosing packaging of any material, in particular an air tight packaging, e. g. plastic, aluminum, recyclable and/or bio-degradable packaging and of any shape and structure, including soft pods or rigid cartridges containing the ingredient.

### Background Art

Certain beverage preparation machines use capsules containing ingredients to be extracted or to be dissolved; for other machines, the ingredients are stored and dosed automatically in the machine or else are added at the time of preparation of the drink.

Most coffee or other beverage preparation machines possess filling means that include a pump for liquid, usually water, which pumps the liquid from a source of water that is cold or indeed heated through heating means, such as a heating resistor, a thermoblock or the like. Such filling means are usually controlled via a control unit of the machine, typically including a printed circuit board with a controller.

For allowing the user to interact with such machines, for providing operation instructions to the machine or obtaining feed-back there from, various systems have been disclosed in the art, for instance as mentioned in the following references: AT 410 377, CH 682 798, DE 44 29 353, DE 202 00 419, DE 20 2006 019 039, DE 2007 008 590, EP 1 302 138, EP 1 448 084, EP 1 676 509, EP 08155851.2, FR 2 624 844, GB 2 397 510, US 4,377,049, US 4,458,735, US 4,554,419, US 4,767,632, US 4,954,697, US 5,312,020, US 5,335,705, US 5,372,061, US 5,375,508, US 5,731,981, US 5,645,230, US 5,836,236, US 5,959,869, US 6,182,555, US 6,354,341, US 6,759,072, US 2007/0157820, WO 97/25634, WO99/50172, WO 2004/030435, WO 2004/030438, WO 2006/063645, WO 2006/090183, WO 2007/003062, WO 2007/003990, WO 2008/104751, WO 2008/138710, WO 2008/138820 and WO 2009/016490.

Nowadays beverage preparation machines provide an increasing number of different functionalities. This allows a greater flexibility for the user but on the other hand also makes it more difficult for the user to find the functionalities matching his needs. Further, the increased number of functions does also include functionalities, which might cause a financial or other damage to the proprietor of the machine when used by an unauthorized person.

Further, for example in the case of B2B solutions, where the beverage preparation machine is commercially used and accessed by a plurality of different users, it is desirable to allow every user to use the beverage preparation machine in a specific way but on the other hand it is again difficult for the different users to operate the beverage preparation machine in a way satisfying their respective needs.

Systems for making and delivering a customized beverage product to a consumer are known from the art, for example, from document WO 01/12039 A2. However, these systems do not provide any flexible and secure solution to automate the execution of stored processing steps, based upon the identification of the consumer. In particular, when remote resources are involved in the execution of the stored processing steps, securing the access to these resources and providing an efficient way to handle remotely stored data is particularly relevant. Systems known from the art do not provide any effective solution to address these problems.

Document EP-A-1491121 discloses a beverage preparation machine according to the preamble of independent claim 1.

### Summary of the Invention

It is therefore an object of the present invention to improve the prior art.

Further is an object of the present invention to provide a beverage preparation machine comprising a card reading arrangement and a method for operating a beverage preparation machine comprising a card reading arrangement, which allows a user based control of the operation of the machine.

More specifically, it is therefore an object of the present invention to provide a beverage preparation machine comprising a card reading arrangement and a method for operating a beverage preparation machine comprising a card reading arrangement, which allows a personalization of the machine or of the use of the machine. It is further an object of the present invention to provide such a machine and method, which allow to operate the machine depending on the current user and/or depending on specific access rights and/or to access a distant server via a network using the card reading arrangement as a means to give access to this distant server and/or specific functionalities controlled by the distant server.

According to a first aspect the present invention relates to a beverage preparation machine, in particular a capsule-based machine, according to independent claim 1.

According to a further aspect the present invention relates to a program stored on a memory device and executable by a control unit of a beverage preparation machine, in particular a capsule-based beverage. preparation machine, according to independent claim 13.

Further features, advantages and objects of the present invention will become evident by means of the Figures of the enclosed drawings as well as by the following detailed explanation of illustrative-only embodiments of the present invention.

### Brief Description of the Drawings

The invention will now be described with reference to schematic drawings, wherein
Figs 1a, 1b, 2a and 2b show different perspective views of a beverage preparation machine according to the present invention,
Fig. 3 shows a block diagram showing schematically the functional architecture of a beverage preparation machine according to the present invention being connected to a network,
Fig. 4 shows a block diagram showing schematically the functional architecture of a network comprising a beverage preparation machine according to the present invention,
Fig. 5 shows another block diagram showing schematically the functional architecture of a beverage preparation machine according to the present invention,
Fig. 6 shows another block diagram showing schematically the functional architecture of a system comprising a beverage preparation machine and a server according to the present invention, and
Figs. 7 to 9 show schematic overviews over the process steps of the method according to the present invention.

### Detailed Description

The machine according to the present invention can be a coffee, tea or soup machine, in particular a machine for supplying a beverage or liquid food by passing hot or cold water or another liquid through a capsule containing an ingredient of the beverage or liquid food to be supplied, such as ground coffee.

For example, the preparation machine comprises: an ingredient processing arrangement including one or more of a liquid reservoir, liquid circulation circuit, a heater, a pump and a beverage preparation unit arranged to receive ingredient capsules, and evacuate capsules upon use thereof; a housing having an opening leading into a seat to which capsules are evacuated from the preparation unit; and a receptacle having a cavity forming a storage space for collecting capsules evacuated to the seat into the receptacle to a level of fill. The receptacle is insertable into the seat for collecting capsules and is removable from the seat for emptying the collected capsules. Examples of such ingredient processing arrangements are disclosed in WO 2009/074550 and in WO 2009/130099, which are incorporated herein by reference.

The machine may include an interface as described in PCT/EP09/058540 and/or be in a network for reordering capsules as described in EP 09169800.1.

The machine may comprise a user-interface screen for providing information to the user and/or for accepting input by the user. The user-interface screen can be a touch-sensitive screen and/or comprise touch-sensitive input parts. The machine may have a user-input device, such as a touch pad, one or more buttons and/or switches or similar devices known in the art. The user-interface screen can be stylus sensitive.

A stylus may for instance be used to select predefined options displayed on the interface-screen or to write notes and messages on the user-interface screen that may be stored by the machine and re-accessible later. Hence, the screen may be used as a substitution for a post-it. Hereby, it may be possible to select different colors when writing on the screen.

According to the present invention, the liquid food or beverage preparation machine has an interface for connection to a remote network, such as a network for accessing remote data displayable on the user-interface screen and/or for transferring local data acquired via the user interface screen, in particular a network for: supplying visual and/or audio information in relation with a liquid food or beverage that can be requested by the user; and/or for ordering, in particular from a remote supplier, goods such as liquid food or beverage ingredients or a service related to this machine by using the user-interface screen.

Hence, the user may be given the technical possibility to order directly through the beverage preparation machine liquid food or beverage ingredients that are missing or at a low level, or request directly through this machine the most up to date information on a particular item, in particular a liquid food or beverage he has requested or intends to request the machine to prepare or order from the supplier.

Moreover, the user-interface screen can be arranged to perform at least one function selected from: displaying information to the user regarding a parameter of the machine that requires a user intervention, displaying locally stored and/or remotely emitted graphic or text matter, a notepad function, and a visual ambiance generator, for instance by displaying appropriate pictures or moving color shapes, for instance of the screen-saver type.

In order to noticeably affect the ambiance surrounding the machine by visual effects, the user-screen has to dominate the user-visible part of the machine. An interface screen of small size and/or lost somewhere on the user-visible part of the machine will not provide an optimal ambiance effect.

Furthermore, the liquid food or beverage preparation machine may include a sound input and/or output device. The sound device can be arranged to cooperate with the user-interface screen, in particular a sound device arranged to cooperate functionally with the screen, such as a sound device for providing melodic acoustic feed back in reaction to a user-input on the user-interface screen and/or cooperating with the screen so that harmonious visual feed-back is generated on the user-interface screen in reaction to an audio signal. The sound device may include a voice recognition arrangement so as to be able to receive vocal user-commands and/or to link a particular user profile from a voice analysis.

For example, the user-interface screen may be arranged to display a movie, news, weather forecast, stock exchange information or anything alike while the machine is preparing a liquid food or beverage, so that the user does not have to wait until the liquid food or beverage is prepared to move on to such activities but can do them right from the beginning, with a comfortable interface screen whose functionalities go significantly beyond mere input and/or output of data.

Such liquid food or beverage preparation machines are particularly handy for preparing a liquid food or beverage during an on-going broadcasted radio or TV program. The user may thus get himself a liquid food or beverage while he is following such a program on an ordinary TV or radio and still continue to follow the program on the beverage preparation machine. Hence, the user will not be attempted to wait the end of the program or an advertising break. The beverage preparation machine may include a receiver that is capable of reacting to a remote control device, such as an IR or radio remote control device, in particular a remote control device compatible with a radio or television, so that the user may start-up the food or beverage preparation machine from a distance, in particular while he is sitting in front of his TV or nearby the radio. The liquid food or beverage preparation machines may of course be connected to a DVD or other media source so that the user can follow his favourite programs while he is preparing a liquid food or beverage.

The machine can be substantially formed by a main body having a rectangular front side being dominated by the user-interface screen and a foot portion larger than the top portion, so that the main body is tapering from the foot portion to the top portion. The main body may include at least one of: a drip tray having a support member for a receptacle to be filled with a liquid food or beverage, a capsule collector, and a liquid supply reservoir such as a water reservoir.

Moreover, the machine may have a liquid food or beverage outlet located above an area for receiving a receptacle to be filled, the outlet preferably being hidden by the user-interface screen. For instance, the outlet is located perpendicularly behind the user-interface screen. In fact, the entire area or a substantial part thereof can be located perpendicularly behind the user-interface screen.

Thus, in addition of providing a user-interface screen configuration on the machine that naturally and durably captures the user's attention, the machine's outlet, and optionally the receptacle located there under, may be hidden from the user's visual field so as avoid distraction of the user's attention by parts and/or operations of the machine other than those relating to the user-interface screen.

As already mentioned, the present invention relates to a machine connectable to a data-exchange network, the machine being configured for preparing a beverage in particular from a pre-portioned beverage ingredient in a capsule.

For this purpose, the machine comprises a communication module for connecting the machine to said network via a wired or wireless connection. The network to which the communication module is connectable may be the internet, an intranet, GSM network, UMTS network, Bluetooth network, infrared (IR) or a similar network to which one or more distant computers, servers and terminals are connected for communicating with the communication module of the beverage preparation machine. Hereby, the term "network" is intended to refer to a system comprising the machine according to the present invention and at least one further device, which are connected to each other via a communication link for one-directional or bi-directional communication. In case that a connection to more than one device is provided, the machine can also be connected to different devices via different types of communication networks.

Without controlling or participating to the control of the ingredient processing arrangement, the communication module may be configured in the beverage preparation machine to monitor certain aspects of the machine and, in particular, communicate such aspects onto the network to a remote server.

The machine further comprises a control unit for controlling all processes within the machine. In one embodiment, the control unit is arranged to communicate data to the communication module, the data relating to at least one of: the beverage preparation process; the ingredient processing arrangement; the control unit and/or beverage preparation settings. This information may then be communicated (or not) to a distant server and be processed for general or particular commercial or servicing or repair or counseling purpose.

In an even safer embodiment, the control unit is prevented from communicating with the communication module. In this case, the communication is not even unidirectional like above but inexistent. Hence, the control unit is configured to receive no signal at all from the communication module not even a signal for an information request. In this embodiment, no data communication channel is needed between the control unit and the communication module.

Typically, the ingredient processing arrangement comprises one or more sensors for measuring parameters of the status of the ingredient processing arrangement and/or the beverage preparation process. For instance, such sensors may include at least one of: temperature sensors, a pressure sensor, a flowmeter, an electric power sensor, an overheat sensor, a scale sensor, a water level sensor, an ingredient recognition sensor, etc... Such sensors are usually connected to the control unit.

In an embodiment, the communication module can be arranged to receive information from at least one of the sensor(s). The communication module may be directly connected to the sensors, usually in parallel to the control unit, or it may be indirectly connected to the sensor(s) via the control unit and typically be communicated a sensor-related information after processing by the control unit.

Normally, the control unit is connected to a beverage preparation user-interface. The user would use this user-interface to operate the ingredient processing arrangement via the control unit.

Typically, the communication module is connected to a communication user-interface. The user would use this user-interface to retrieve information from the network or retrieve information therefrom.

Such user-interfaces may include screens and touch screens, buttons, switches, etc... as known in the art.

Preferably, the control unit is connected to a beverage preparation user-interface and the communication module is connected to a communication user-interface, the beverage preparation user-interface and the communication user-interface being juxtaposed. In particular, the beverage preparation user-interface can be flush with the communication user-interface. The beverage preparation user-interface and the communication user-interface may be disposed in a single user-interface canvas. Hence, the disposition of the user-interfaces may be such as to appear like a single interface providing all the user-access to the control unit and the communication module.

Whereas the control unit and the communication module may be digitally and/or physically, entirely or partly, separated within the machine, the corresponding user-interfaces may be configured as an apparent single interface. Hence, the user is confronted with a single or concentrated user-interface arrangement to avoid the dispersion of his/her attention all over the beverage preparation machine.

Typically, the beverage preparation machine comprises a housing for housing: the ingredient processing arrangement; the control unit; and the communication module. This housing would normally also bear the user-interfaces.

For instance, the communication module is arranged to receive from the network and communicate via user-communication means, such as a display and/or loudspeaker, information relating to at least one of: a need to carry out a particular service; a need to repair said machine; and information on a particular ingredient that is being processed in said machine. When the communication module is configured to monitor the machine operation and/or components of the machine, the corresponding information may be communicated to a distant server of the network for evaluation and generation of suggestions to the user, for instance, via the communication module. For example, via appropriate sensor systems, the communication module may monitor the ingredient consumption and suggest timely reordering when the stock of ingredient is low or send general information regarding the ingredient or beverage that is being processed for display on the machine. Instead of a mere suggestion to reorder ingredients, e.g. proportioned ingredients capsules, the system may be configured to proceed to automatic re-ordering when the ingredient stock is low.

The communication module may be arranged for remote monitor of the service periods, for instance for carrying out a descaling process or for general maintenance. The communication module may communicate various parameters of the ingredient processing arrangement and the control unit for diagnosis purposes and/or for carrying out a market survey as to the user's preferences, for instance the actually used ratios of different ingredients. Hence, a distant server may monitor the preferred volume of beverage dispensing with certain ingredients, etc...

More generally, the communication module may be arranged to receive from the network and communicate via user-communication means, such as a display and/or loudspeaker, information relating to: handling of this type of machine by a user, e.g. provide an on-line user manual and/or beverage recipes; advertising relating to beverage preparation machines, accessories, one or more ingredients that are being processed or related products; general information relating to one or more ingredients for the beverage processing; and visualization and/or music for generating an ambiance relating to such beverages or preparations thereof or consumptions thereof; and news and/or weather forecast, etc... For example the communication module with the appropriate user-interface may be configured to permit distant ordering of ingredients via the network.

The beverage preparation machine can be arranged to automatically monitor the capsule consumption and send a capsule order to the supplier server whenever the automatic monitoring indicates a reaching of a shortage of consumable ingredient capsules at the customer location, the supplier server being arranged to receive the capsule order and to generate a corresponding instruction to prepare a shipment of a new stock of capsules for supply to the customer.

The beverage preparation machine may be arranged to communicate automatically the capsule consumption to the supplier server that is arranged to automatically monitor the capsule consumption and to generate the above instruction.

The machine's capsule extraction unit can be arranged to receive different types of ingredient capsules for preparing different beverages. For example, the extraction unit is arranged for receiving different coffee capsules types selected from capsules of arabica, robusta, canefora, etc... and blends thereof, e.g. the NESPRESSO™ capsule ranges of capsule types, of the in-home or the out-of-home beverage preparation machine standards.

In an embodiment, the beverage preparation machine has an automatic capsule recognition arrangement.

For example, the capsule recognition system is of the type disclosed WO02/28241 which discloses a coffee machine using capsules with a machine interpretable feature that can be read automatically by the machine via a sensor. The machine interpretable feature on the capsule may include one or more of a colour, a shape, a glyph, a text string a barcode, a digital watermark, symbols, notches, grooves or holes.

For instance, the capsule extraction unit is arranged to receive different types of ingredient capsules for preparing different beverages, the automatic capsule recognition arrangement being arranged to identify the type of the capsules that are being used.

Indeed, when different capsule types are likely to be used in the same extraction unit, it is not sufficient to count the number of extraction processes carried out to derive the remaining capsule stock. The types of capsules should be identified by the machine so as to provide a differentiated management system aligned to the different capsule types.

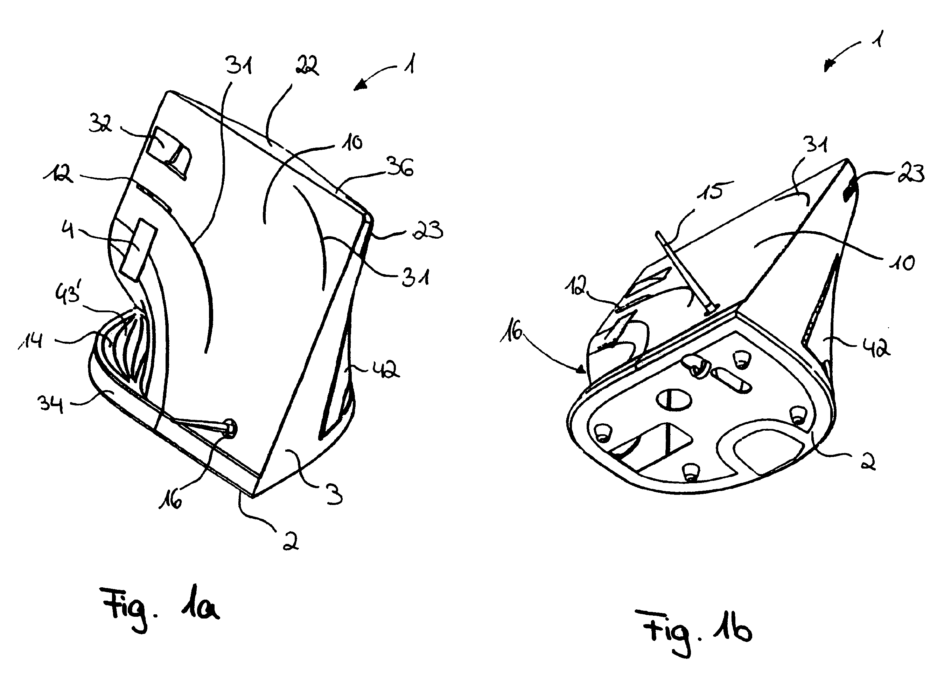

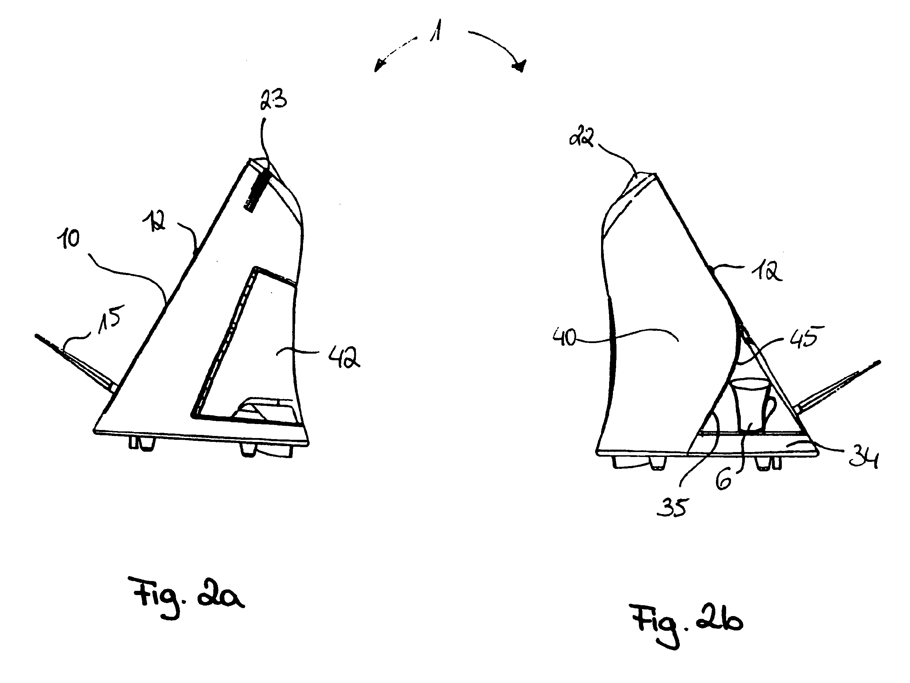

In the following with reference to Figs 1a, 1b, 2a and 2b the beverage preparation machine 1 according to the present invention and its basic functionalities will be described. Hereby, Fig. 1a is a perspective top view of the beverage preparation machine 1, Fig. 1b is a perspective bottom view, Fig. 2a is a side view on a first side of the beverage preparation machine 1 and Fig. 2b is a side view on the second side of the beverage preparation machine.

In the following the machine 1 will be described as coffee preparation machine, however, it is noted that the present invention is not limited to a coffee preparation machine but comprises any other type of beverage preparation machine as previously explained.

The machine 1 has an arrangement 40 for processing one or more beverage ingredients to dispense a beverage, such as coffee. Arrangement 40 includes a reservoir 42 for liquid, preferably water, connected to a liquid circulation circuit typically with a pump, a heater and a coffee brewing unit, as known in the art. The brewing unit can be connected to a handle 4 pivotally mounted at the housing 3 of the machine 1. The handle 4 is arranged to allow introduction, extraction and removing of a capsule containing a ground coffee, in particular in the form of a cartridge or pod. Upon extraction, capsules are evacuated to a used capsule collector after activating the handle 4 again.

Additionally, machine 1 has a top portion 36 which may be used for holding spare cups. Top portion 36 may include a heating arrangement to preheat such spare cups. The cup heater may be of the resistive type, in particular a vapour circulation cup heater as known in the art, or any other suitable heating system. A spare capsule receptacle may also be located on top portion 36 of machine 1 for storing unused capsules.

Moreover, machine 1 has an outlet 45 from which the prepared beverage is dispensed into a receptacle or cup 6 placed underneath the outlet 45, as shown for example in Fig. 2b. A drip tray arrangement 34 is provided under outlet 45, for instance of the type disclosed in EP 1731065. For positioning cup 6 under outlet 45, drip tray may include a positioning arrangement at its surface 14 and/or walls 35 delimiting dispensing cavity may be positioned relative to outlet 45 to serve as references for a cup positioning, i.e. so that a cup 6 may simply be pushed against walls 35 to be properly positioned under outlet 45. Also provided is a used capsule collector (not shown in the Figures) in a central part of machine 1 for collecting used, extracted capsules.

The machine further comprises a screen or display 10. Preferably, the display 10 is a touch sensitive screen and may be operated by finger contact and/or with a stylus 15. Preferably, the stylus 15 when not being used can be placed into a corresponding recess 16 within the display 10 or any other part of the machine 1.

Furthermore, display 10 is associated with a pair of buttons 12, for example for quick operation of machine 1 without having to access display 10. Moreover, in a preferred embodiment, display 10 includes a touch sensitive surface for navigating through pages and menus displayable on display 10.

Display 10 may be arranged to display various information and/or visual effects, as for example mentioned above, including network information when the machine is connectable to a user-network. Moreover, machine 1 may include a sound generating arrangement with loudspeakers and/or microphone and be a true multimedia interactive device, as discussed above. The machine 1 thereby may be used to contribute to the ambience.

In addition to display 10 and/or housing 3 may in particular have a series of holes 31 on its lateral, rear and/or upper sides, in particular within display 10, for the emission of light, of various colors, to create such an ambiance. For this purpose LEDs of various can be provided within the holes 31.

Unlike prior art beverage preparation machines, drip tray 34, capsule receptacle and reservoir 42 are removable from the machine 1, in a movement underneath the display 10 and that goes away from display 10 and/or generally parallel to the foot portion 2 of the machine 1. The same applies to reservoir 42, which preferably is provided at the back of the machine beyond the display 1. It follows that during use and after use, when the machine is serviced, e.g. drip tray 34 emptied, display is not exposed to parts of machine 1 that might project liquid, such as liquid food or beverage, against screen 10.

Furthermore, machine 1 has a capsule inlet arrangement 32 for the supply of capsules containing an ingredient of the liquid food or beverage to be prepared, such as coffee. The capsule inlet arrangement 32 can be either provided on the lateral side of the machine or can be provided within the display 10. Preferably, the capsule inlet arrangement 32 is a recess within the display 10 having the shape of a capsule or any other object related to the prepared beverage.

The display 10 of the machine has not an entirely flat surface but on one side when approaching the foot portion 2, provides a recess. The recessing walls 35 of the display 10 together with the cup support 14 of the drip tray 34 thus provide a cavity 16 into which the cup 6 can be placed to be filled with the beverage dispensed from the outlet 45. To deemphasize the liquid food or beverage visual aspect of machine 1, the walls 35 of the display 10 within the cavity 16 can be used like a normal display, so that every object and/or image displayed on the display 10 extends into the cavity walls 35.

On the top portion 26 or on any other part of the machine, a touch sensor 22 can be provided enabling the user to control the machine and/or to navigate through the menu functions by carrying out a corresponding touch operation on the touch sensor 22. In case that the display 10 is a mere display and not a touch screen, the touch sensor 22 will make the control of the machine easier and more intuitive for the user. In case that the display 10 is a touch screen, then the user has the choice whether to use the display 10 or the touch sensor 22 for carrying out the touch operation. However, it might be advantageous to use the touch sensor 22 instead of the touch screen to avoid damage or contamination on the display 10.

The machine 1 can further comprise a card reader/writer 23. The card reader/writer 23 can either be a slot, into which a card can be inserted to carry out a reading and/or a writing operation on the card, the card reader/writer 23 can be a wireless interface enabling a wireless communication with a card, e.g. a radio frequency identification RFID card, or a combination thereof.

In order to provide an adjusted filling of the cup, an automatic filling system with a control of the level of fill may be implemented into the machine, for instance of the type disclosed in US 4,458,735, WO97/25634 and WO99/50172.

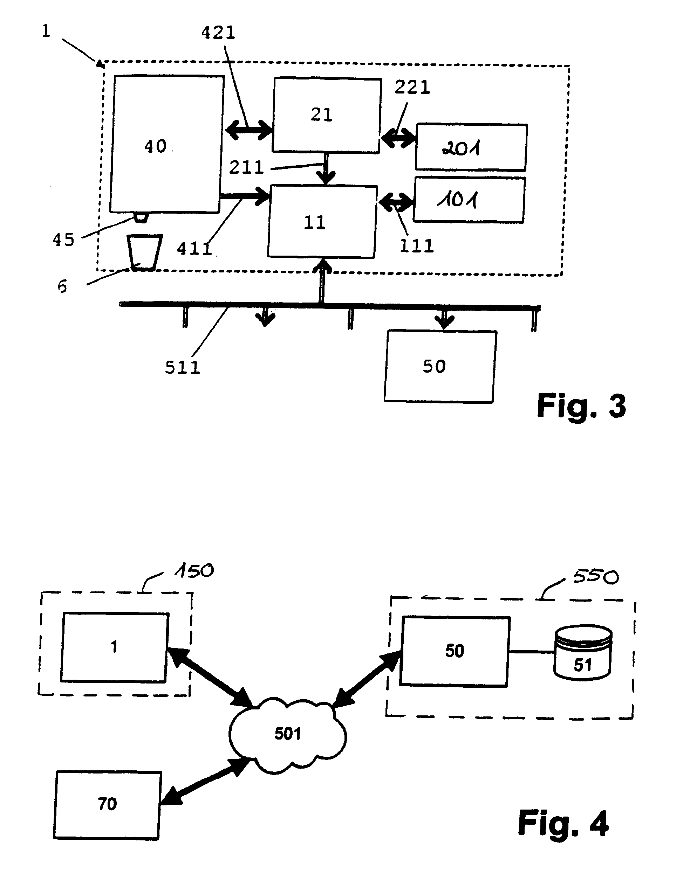

Fig. 3 shows a functional block diagram of a beverage preparation machine 1 according to the present invention which is connected to a network 511.

Beverage preparation machine 1 includes a control unit 21 connected to a user-interface 201 via a bi-directional data communication channel 221. Control unit 21 is connected to the ingredient processing arrangement 40 for controlling the processing of the beverage ingredients. Typically, control unit 21 will control the powering of a heater and a pump and adjust the powering based on measured parameters of the beverage preparation process via sensors, such as temperature sensors, pressure sensors and flowmeters. Moreover, the control of the components of the ingredient processing arrangement 40 may be adjusted to the type of ingredient capsule extracted upon automatic recognition thereof via a capsule recognition system as known in the art, for instance an electromagnetic, mechanical, color or barcode recognition system.

Hence, ingredient processing arrangement 40 includes a series of sensors for returning information to control unit 21 relating to the state of arrangement 40 and of the beverage preparation process. Communication between control unit 21 and beverage preparation 41 is achieved via a bidirectional communication channel 421.

Furthermore, beverage preparation machine 1 has a communication module 11 for bidirectional communication with an external network 511, such as the internet or an intranet. Communication module 11 is connected to a user-interface 101, preferably in the form of the above mentioned display 10, preferably a touch screen, and possibly one or more buttons 12, via a bidirectional data communication channel 111. Display 10 in case of a touch screen may be operated by finger touch or by way of the stylus 15.

Control unit 11, communication module 21 and ingredient processing arrangement 40 are all contained within the housing of beverage preparation machine 1.

Communication module 11 is permanently prevented from controlling the processing of the beverage ingredients. In other words, communication module 11 of beverage preparation machine 1 may not act directly or indirectly via control unit 21 on arrangement 40 or affect the beverage preparation process or other processes carried out by arrangement 40.

Control unit 21 is prevented from accepting beverage preparation-related control data from communication module 11.

In the architecture of Figure 3, the control unit 21 is arranged to communicate data to communication module 11 via unidirectional data communication channel 211. With the exception of a request for information and the signals necessary to ensure proper communication, e.g. data transmission control signals, control unit 21 will not receive any data from communication module 11. Conversely, the data transferred from control unit 21 to communication module 11 may relate to at least one of: the beverage preparation process; ingredient processing arrangement 40; beverage preparation settings stored in control unit 21; and/or the state of control unit 21, e.g. in the view of identifying any malfunctioning at a station 50 remotely connected to network 511.

It is also possible to connect communication module 11 directly to the sensors in the beverage preparation module 40. Likewise, communication between beverage preparation module 40 and communication module 11 is unidirectional via bus 411. However, this communication channel may become redundant if the data relating to the beverage preparation module 40 can be communicated to the communication module 11 via control unit 21. Communication channel 411 is particularly useful in the absence of communication channel 211, for instance when the control unit 21 should benefit from an increased protection against network 511.

Communication module 11 is arranged to receive from said network and communicate via user-communication interface, such as display 10 and/or loudspeaker, information relating to at least one of: a need to carry out a particular service, e.g. descaling; a need to repair said machine; and information on a particular ingredient that is being processed in said machine. For such information to be sent to communication module 11, corresponding information is first gathered together by communication module 21 from control unit 21 and/or ingredient processing arrangement 40 and sent to a remote server 50 that processes and analyses the information before returning, when appropriate warnings or other information to communication module 11 via network 511.

In another embodiment, control unit 21 is prevented from communicating at all with communication module 11, not even unidirectionally. There is no data communication channel between control unit 21 and communication module 11.

The highest degree of safety is achieved when communication module 11 is connected neither to control unit 21 nor to beverage preparation module 40. A slightly inferior protection is achieved when communication module 11 is allowed to read, via a unidirectional channel, sensors of beverage preparation module 40. A still lower safety is obtained when communication module is allowed to obtain information from control unit 21. To ensure immunity against any upsetting of ingredient processing arrangement 40 and the control unit 21 via network 511, the possibility, in particular any physical possibility, for communication module 11 to change parameters of the control unit 21 or beverage preparation unit 40 should be avoided.

As shown in Figures 1a and 1b beverage preparation user-interface 201 is flush with communication user-interface 101 and implemented as a combination of display 10, buttons 12, holes 31 comprising LEDs or the like, loudspeakers, microphones or the like.

A master switch for the machine 1 is also provided (not shown in the Figures). The master switch is arranged to connect and disconnect the powering of the various components of the beverage preparation machine, including communication module 11, control unit 21 and ingredient processing arrangement 40 all powered by the same power source, typically the mains.

Generally, communication module 11 can be arranged to receive from the network 511 and communicate via user-communication interface, such as a display 10 and/or loudspeaker, information relating to: handling of such machine 1 by a user; advertising relating to such machine 1 or related machines, accessories, and/or one or more ingredients for the beverage processing; general information relating to one or more ingredients for the beverage processing; visualization and/or music for generating an ambiance relating to said beverage or preparation thereof or consumption thereof; and news and/or weather forecast.

The housing 3 contains the beverage preparation arrangement 40 and the control unit 21. The card reading arrangement 23 is connected to the control unit 21 and can be located inside or outside the housing 3.

Fig. 4 shows a network comprising a machine 1 according to the present invention having network capabilities. Connected to the communication network 501 is also a server 50, which for example can be associated to a capsule supplier and/or to a service centre for the machine 1. The server 50 can be further connected to a database 51 comprising data on users, capsules, machines, capsule consumption or the like. The machine 1 is hereby positioned at a customer location or user location 150 being remote from a vendor location 550, where the server 50 is positioned.

A user device 70 can further be connected to the network 501. Such a user device 70 can for example be a notebook, PC, mobile phone, PDA or any other user device having network communication capabilities.

Via the user device 70 the user can for example submit data, programs or information to the machine 1. For example he can load new or updated software or data into the machine 1. He can also change the settings of the machine remotely. Depending on the degree of communication possibilities between the control module 21 and the communication module 11, the user can also remotely start, stop or change a beverage preparation process. The user via the user device 70 can also log into the server 50 in order to change his personal user configurations, to submit a capsule order, to send a request for support or information or the like.

Even though in Fig. 4 the network 501 is shown as one single network connecting the machine 1, the server 50 and the user device 70, it is also possible that the different devices communicate via one or more separate network. Any type of network can be possible including a public or a private network, for example via Bluetooth, infrared, GSM, UMTS, internet or any other type of wired or wireless communication network. Specifically, an intermediate device such as a telemetry device can be provided between the machine 1 and the network 501 in order to convert the corresponding data which are transmitted. The communication between respectively two of the devices, i. e. the machine 1, the server 50 and the user device 70 can be one- or bidirectional.

The beverage preparation machine according to the present invention comprises a card reading arrangement for reading information from a card. A user or customer possessing such a card can thus have stored different types of information thereon, so that when the machine reads the stored information from the card, it is possible to personalize the machine and its functionalities. In other words, information regarding the processing of the machine, e.g. information regarding the beverage preparation process or the like, can be stored on the card and/or can be derived from data stored on the card.

The beverage preparation machine according to the present invention also relates to security aspects. The information stored on the card might be used as authorization of specific processing steps of the machine, i.e. the machine will carry out predefined processing steps only in case that a corresponding authorization is present. This is useful in cases, where processing steps might result in damaging the possessor of the machine if accomplished by a unauthorized person.

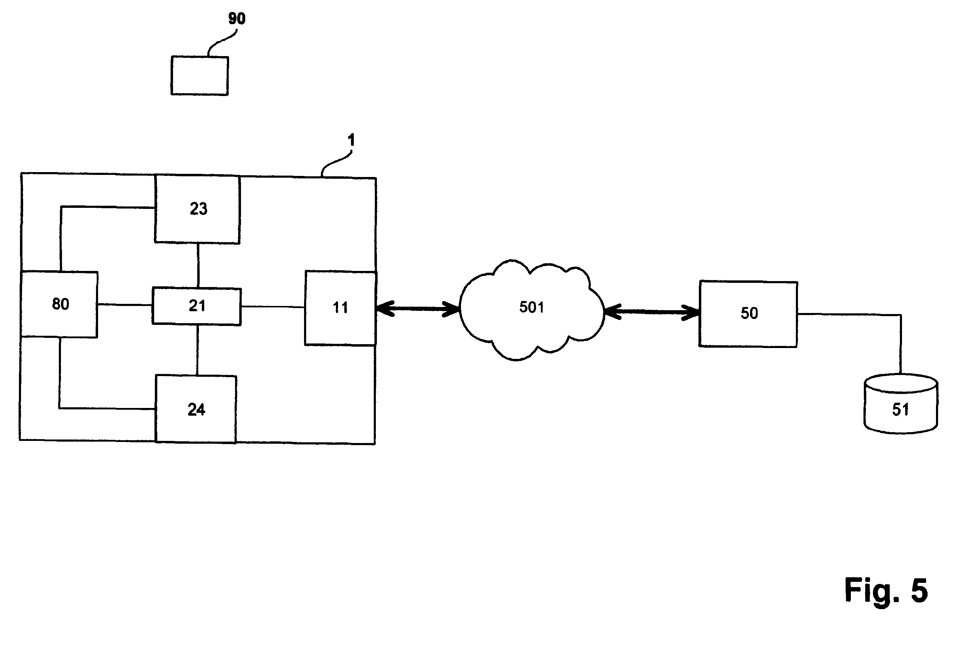

A beverage preparation machine 1 with a card reading arrangement according to the present invention is shown in Fig. 5. Hereby, only the components which are necessary for understanding the different aspects of the present invention are shown and other components in Fig. 5 are omitted for the sake of clarity.

The machine 1 comprises a control unit 21, which has already been explained with respect to previous Figures. In a preferred embodiment, a communication module 11 is provided enabling a communication with one or more external devices, such as an external server 50 via a corresponding network 501, 502, 511. As also previously explained, the server 50 can comprise or can be connected to a database 51.

However, it is also possible that the communication module 11 is omitted or inactive and the present invention can also be applied to a machine 1 not being connected to any type of network.

The beverage preparation machine 1 according to the present invention comprises a card reading arrangement, which can comprise a wireless card reader 24 and/or a card slot 23. Even though in Fig. 5 both types of card readers are shown, it is of course possible that the machine 1 comprises only one single of the shown card readers types that the machine comprises a single card reader being a combination of the mentioned card slot 23 and wireless card reader 24.

The card reading arrangement 23, 24 can further be a combined reading and writing arrangement, which is not only able to read information from a card but also to write information onto a card.

As schematically shown in Fig. 5 a card 90 having stored thereon different types of information can be read by the card reading arrangement 23, 24 of the machine 1.

As card 90, any type of card can be used. In its simplest form, the card 90 can be a transponder, having stored thereon a unique identification number, which can be read out by the card reading arrangement 23, 24. In a preferred embodiment this identification number serves as user identification information uniquely identifying a single user. Alternatively or in addition thereto user settings can be stored on the card, indicating specific functionalities of the machine. Comprised within the user settings can for example be settings regarding the preparation of the beverage, such as for example type of beverage, amount of water, temperature, amount of additional ingredients, i. e. milk or the like and/or any type of other setting information.

In case that the card 90 is a transponder, it can for example be a radio frequency identification (RFID) chip or a card 90 having a memory for storing thereon user identification information.

The wireless card reader 24 is adapted to wirelessly read user identification information and/or user settings from the card 90 when the card 90 is in vicinity of the machine 1. Hereby the vicinity comprises several meters. The wireless card reader 24 can read from the card 90 for example via RFID, Bluetooth, Infrared (IR) or any other type of wireless communication. The card 90 can also comprise a barcode or the like, which can be wirelessly read by a scanner implemented within the wireless card reader 24.

The card slot 23 is adapted to receive at least a part of the card 90 therein. From a corresponding chip, memory or the like, the user identification information and/or the user settings are read. The card 90 hereby can be a machine-related card, which is handed over to a user or customer when purchasing the machine or when starting use of the machine 1. The card 90 thus can have for example only the aim to serve as user identification at the machine 1 and/or as storage for user settings related to the machine 1.

In an alternative embodiment an already existing card can be used, for example a credit card of the user, a SIM-card (subscriber identity module) of a mobile phone or the like. Hereby, the data stored on this card can be used as user identification data, for example the mobile phone number stored on a SIM-card can also be used as identification at the beverage preparation machine 1. Alternatively, if possible, there can be stored additional information on the card serving as a user identification information which can only be used together with the machine 1.

The machine 1 can further comprise a memory 80 for storing any type of data and/or information. Preferably, the memory 80 is connected to and in data communication with the wireless card reader 24, the control unit 21 and the card slot 23.

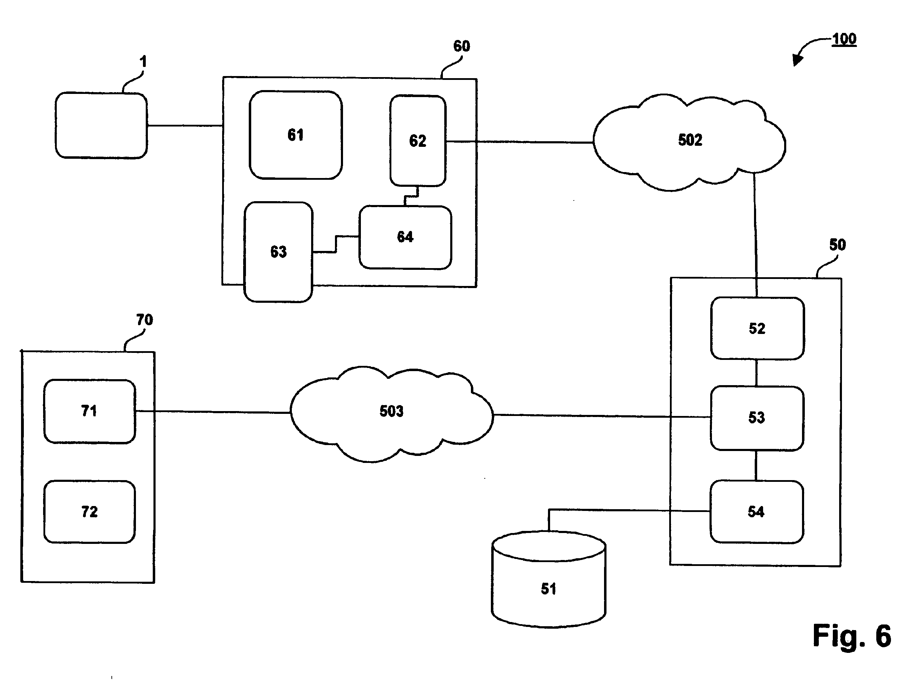

A system 100 comprising a beverage preparation machine according to the present invention, its components and the functionalities will be explained with reference to Fig. 6, which shows the functional architecture of a system 100 comprising a beverage preparation machine 1 and a server 50. As already explained with reference to Fig. 4, the beverage preparation machine 1 is provided at a customer location 150, which is remote from the vendor location 550, where the server 50 and optionally the database 51 are positioned.

Optionally, there can also be provided a user device 70 connected to the server 50.

In the system 100 as shown in Fig. 5, the beverage preparation machine 1 via a telemetry device 60 and via a first network 502 is in data communication with the server 50. In a preferred embodiment, the first network 502 is a GSM network. The use of any other type of wired or wireless network is also possible for enabling a one-directional or bi-directional data communication between the machine 1 and the server 50. Even though in the present embodiment an external telemetry device 60 is provided, all functionalities for communicating can be integrated into the communication module 11 of the machine 1, so that no external devices are necessary and the beverage preparation machine 1 is directly connected to the first network 502.

The user device 70, if present, is also in data communication with the server 50 via a second network 503. In a preferred embodiment the second network 503 is the internet or any other public or private network, however it is also possible to enable communication between the user device 70 and the server 50 via any other type of wired or wireless network.

In a further alternative, instead of providing separate networks for communication between the beverage preparation machine and the server 50 on one hand and the user device 70 and the server 50 on the other hand, there can also be provided one single communication network as for example shown in Fig. 4, to which all devices are connected.

Additionally to the architecture shown in Fig. 5, the user device 70 can also be in data communication with the beverage preparation machine 1 via a corresponding communication network.

Server 50 further comprises or is connected to a database 51 for storing any type of data or information, such as for example user account information, customer information, machine information or the like.

In the following the architecture of the system 100 will be further explained with reference to the non-limiting embodiment shown in Fig. 5, where the first network 502 is a GSM network and the second network 503 is an internet.

In this embodiment, between machine 1 and the GSM network 502 a telemetry device 60 is provided. The telemetry device comprises a GSM transceiver 62 for connecting to the first network 502. Further included in the telemetry device 60 is a core unit 60 for controlling the functionalities of the telemetry device 60 as well as a memory 64 for storing any type of data or information.

Optionally, there can also be provided a USB interface 63 for connecting the telemetry device 60 to beverage preparation machine 1 or to any other device or for reading out data from the telemetry device 60 or for storing data in the memory 64 of the telemetry device 60. The communication between machine 1 and the server 50 in a preferred embodiment is an encrypted communication.

The server 50 comprises a server GSM transceiver 52, preferably an application server 54 for connecting with the database 51 and a web server 53 for connecting with the second communication network 503, which in the present embodiment is the internet.

The user device 70 can for example be a laptop having integrated therein a browser 71 and a web server 72 for connecting with the second communication network 503.

The beverage preparation machine 1 according to the present invention comprises one or more sensors for monitoring parameters related to the beverage preparation process, for example temperature sensor, pressure sensor, flowmeter, electric power sensor, overheat sensor, scale sensor, water level sensor, ingredient recognition sensor or the like. Specifically, in a preferred embodiment of the present invention, machine 1 is a capsule based beverage preparation machine 1 comprising a capsule recognition sensor for recognizing the number and/or type of consumed capsules. Optionally, the beverage preparation machine 1 can stored these parameters in the storage.

The beverage preparation machine 1 submits these parameters or any other information derived from these parameters via the first communication network 502 to server 50. Hereby, the submission can be accomplished either automatically, i.e. in predefined time intervals, depending on the number or consumed capsules or the like, or the submission can happen only upon request by server 50. In this latter case the parameters are stored in a storage of machine 1 and sent after being polled by server 50.

Server 50 in turn based on the received information can initiate a service functionality. Such a service functionality can for example be an indication to the customer of an upcoming maintenance and/or an indication to the customer of a shortage of an ingredient for the machine needed for preparing a beverage. Together with the indication the server can also automatically initiate a process for removing or preventing any failure or disturbance of machine 1.

In the following different embodiments of the present invention will be explained in more detail.

In a first embodiment card 90 can be used to control the beverage preparation process. In this case either a user identification uniquely identifying a user is stored on card 90 and/or user settings indicating parameters of the beverage preparation can be stored on the card.

In case that the user settings are readily stored on card 90, the card reading arrangement 23, 24 will submit the user settings to control unit 21 which then is adapted to control the components, specifically the beverage preparation arrangement 40, of machine 1 according to the user settings. This can include the type of prepared beverage, the amount of liquid used, e. g. water, milk or the like, the pressure, the temperature, the brewing duration or any other parameter. In this embodiment no memory 80 and no communication module 11 are necessary, however, they can be present within machine 1 but are not necessarily required for carrying out this process.

In case that the user identification information is stored on card 90, in a preferred embodiment, control unit 21 reads out the user identification information and looks up in memory 80, whether there are stored user settings together with the respective read user identification information. If this is the case control unit 21 again controls the beverage preparation process accordingly.

The storing of user settings within the memory 80 can be accomplished by connecting a user device 70 to the machine 1 in order to store the user settings therein, it can be accomplished by inputting into the machine 1 user settings, e. g. via a touch screen 10 or the like, or the user settings can be submitted from the server 50 via the network 501 in case that a communication module 11 is present.

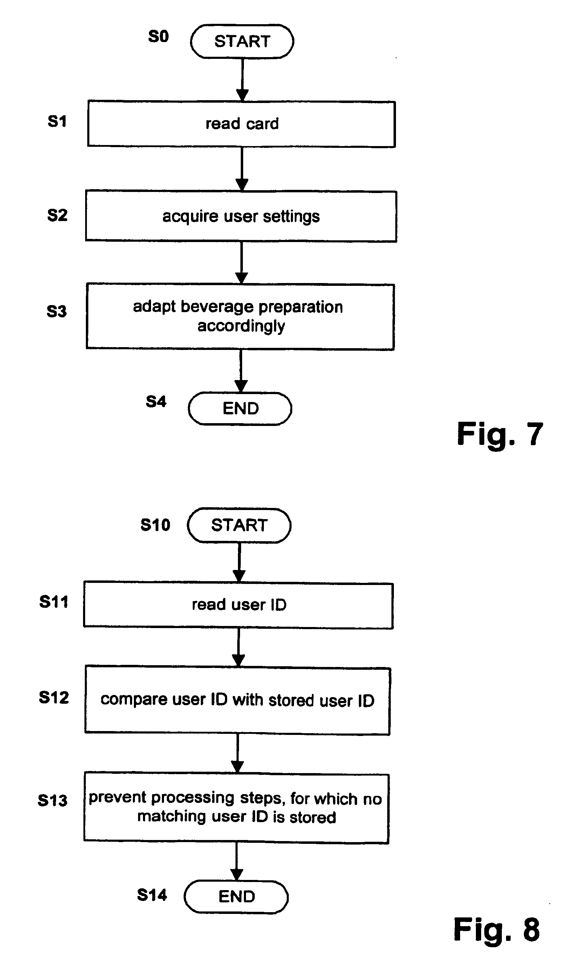

This embodiment is shown in overview in Fig. 7.

In step S0 the process begins for example with the approach of a card to the wireless card reader 24 or with the insertion of a card 90 into the card slot 23.

In the next step S1 the card is read and in the next step S2 the user settings are acquired, which can either be accomplished by reading the user settings out from the card or by looking up the user settings in the memory 80, where they are stored together with the user identification information read from the card.

In the next step S3 the beverage preparation is adapted accordingly and controlled by the control unit 21.

The process ends in step S4.

This first embodiment is advantageous if machine 1 is for example used by a plurality of different users, so that every user can define his preferred settings for the beverage preparation and does not have to input them every time he uses the machine. The user only has to define them once and then can simply use his card to get his preferred beverage produced.

In a second embodiment, the-user identification information uniquely identifying a user is read from the card. In memory 80, an association is stored between user identification information and specific processing steps of the machine. Control unit 21 will then initiate or prevent the execution of the processing steps depending on a match between the stored user identification information and the user identification information read from card 90.

As previously explained, user identification information can be provided in the form of a transponder, or a memory having stored therein user identification information.

Alternatively, an already existing card of the user such as a SIM-card, a credit card or the like can be used.

The data read from card 90 can serve as identification of a user at machine setup. Security relevant process steps are only accomplished, if the read user identification information corresponds to stored user identification which is further associated to the specific process step.

Such a step can for example be the setting up of a communication by the communication module 11 to an external server 50. Such a communication can be security sensitive and/or can result in the accumulation of costs for the proprietor of the machine 1. The setting up of such a communication can therefore be defined as a processing step for which an authentication is necessary.

A further processing step is for example the access of user-related information or services within an external server 50. For example, the access to a user account should be restricted and only possible for corresponding user. Also the connection to a vendor of the machine and/or of accessories for the machine preferably is restricted. A further possibility is that an authentication is needed in case that a purchase request for new beverage products, maintenance parts for the machine and/or any other type of accessory is to be sent to a vendor.

Any distant purchase of goods by a user via machine 1 should clearly identify the purchaser. For this purpose card 90 can be used as an identifier of the purchasing user. Card may be used to allow or deny general access to a distant service or only to such services that involving costs charged to the user. Other services, free services, such as obtaining general or particular information from a remote server, e.g. up-to-date information on a beverage that is being prepared or a beverage recipe or an online user manual, do not have to be restricted to a particular identified user. For example, when machine 1 is used in an office, it may be appropriate to allow any one to access freely available information via machine 1 from remote server 50, but to let only selected users make order of ingredient capsules or other goods that will be charged by the capsule supplier. These selected users are thus provided with such an identification card 90 that will give access to the distant ordering system via server 50.

In memory 80, processing steps are stored for which an authentication is needed. Also stored in memory 80 are user identification information. These user identification can be associated to one or more processing steps thereby indicating that only if the corresponding user identification information is provided to the machine the corresponding processing step is allowed to be carried out.

An overview over this process is given with reference to Fig. 8. The process starts in step S10 and in the next step S11 the user identification information is read from the card 90. In the next step S12 the read user identification information is compared by the control unit 21 with user identification information stored within the memory 80. In the next step S13 all processing steps are prevented from execution for which no match is found between the user ID read from the card and the user ID stored in the storage.

It is hereby possible to define that every processing step has an associated user ID, so that for every processing step within the machine an authentication is needed. Otherwise, only some specific processing steps can be stored for which an authentication is needed and those processing steps for which no user ID is stored in the memory 80 can be accomplished at any time without the need of any type of authentication by a corresponding user ID. In a further embodiment, the beverage preparation machine 1 is connected to an external server 50 via a communication network 501, 502, 511.

In this embodiment, the user ID stored on card 90 is used as identification at machine 1 and then the machine will request user settings stored within the database 51 from external server 50 via communication module 11.

Turning again to Fig. 6, it is for example possible that a user via a user device 70 logs into server 50. He can then define a specific user profile or user account, which is stored in database 51. The user thus can access the profile and define specific user settings. These user settings can be related to the preparation of the beverage, or any other functionality of the machine. It is also possible that the user has an account including an amount of valuable information, from which a specific amount is always subtracted when a beverage is produced. The user thus by accessing server 50 and submitting a payment information or credit card information can increase the amount of valuable information for his account.

If the user then approaches with his card 90 the machine 1, the user identification information is read from the card and submitted to server 50 via communication module 11. Server 50 will look up the corresponding user settings in the database and submit the user settings back to the beverage machine 1, so that control unit 21 can control the functionality in accordance with the user settings. Hereby, this process can be accomplished every time the user approaches the machine with his card 90 or it can only be accomplished for a first time and then from the first use the user settings can also be directly stored within memory 80.

In case that the beverage preparation machine readily comprises all ingredients for preparing a specific beverage, the user settings also comprise information on the type of prepared beverage.

Preferably, the beverage preparation machine according to the present invention is a capsule-based machine and comprises a capsule recognition arrangement adapted to recognize the type of inserted capsule. In case that a user has to insert a capsule into the machine or has to select a capsule within the machine, machine 1 can also be adapted to submit the user identification information together with the type of recognized capsule to server 50. Server 50 will then look up the user settings stored for this user and this specific type of capsule and submit to machine 1 the user settings for the recognized capsule.

In a further embodiment, as already explained, the card reading arrangement 23, 24 is a combined reading/writing arrangement. In this case it is for example possible that after the user settings have been received from server 50, these user settings are written directly onto card 90. This has the advantage that for further usages of machine 1, no communication has to be set up. Further, card 90 can then also be used for preparing beverages at other preparation machines, which do not have the possibility to set up a communication to an external device.

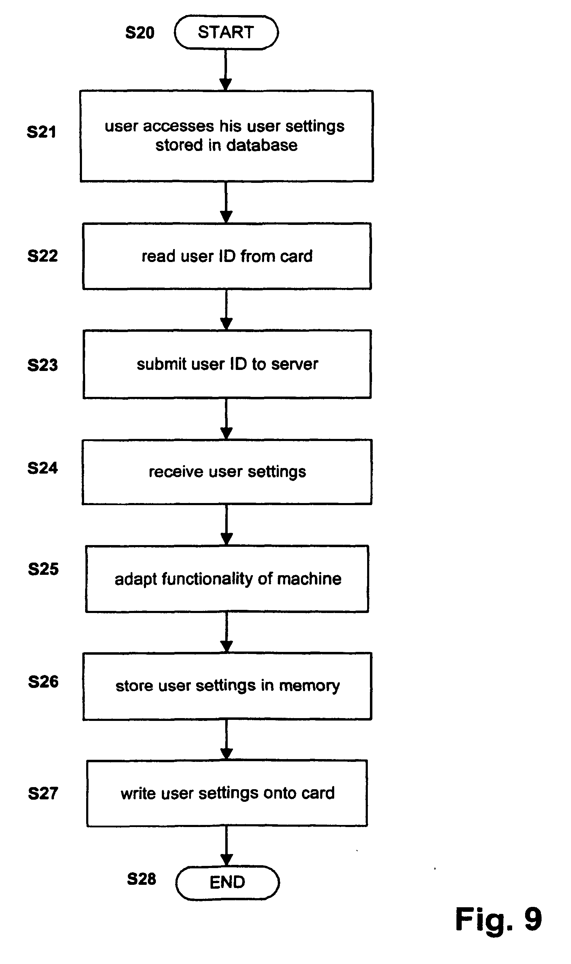

This process will again be explained with reference to Fig. 9.

The process starts in step S20. In the next step S21 the user via user device 70 or via any other means accesses server 50 and creates or changes his user settings stored in database 51.

In step S22, when approaching machine 1 with card 90, the user ID by machine 1 is read from card 90. Via communication module 11, the user ID in step S23 is submitted to server 50. In step S24, the machine receives the user settings from server 50 and, in step S25, the functionality of the machine is correspondingly adapted.

Optionally, in step S26, the user settings are stored in memory 80. Also optionally, in step S27, the user settings are written onto card 90.

The process ends in step S28.

With the present invention therefore a beverage preparation machine is provided which allows personalizing the functionality of the machine in a simple and comfortable way. Further, with the present invention the security of the machine 1 is increased, since for critical processing steps an authentication is required.

## Claims

1. Beverage preparation machine (1), in particular a capsule-based machine,
comprising
a card reading arrangement (23, 24) for reading user identification information uniquely identifying a user from a card (90),
a memory (80) for storing processing steps for which an authentication is necessary and for storing associations between user identification information and said processing steps of the machine (1),
a control unit (21) adapted to initiate execution of a stored processing step only in case of a match between the associated user identification information and the read user identification information,
a communication module (11) for communicating with an external server (50) via a communication network (501, 502, 511), **characterised in that**
in the memory (80) a communication step with said external server and relating to an identified user is stored in association with the user identification information, and
wherein the control unit (21) is adapted to carry out said identified user-related communication step only in case that the read user information matches the user identification information associated to said communication step.

2. Beverage preparation machine (1) according to the preceding claim, wherein carrying out said identified user-related communication step involves a distant ordering of goods charged to said identified user.

3. Beverage preparation machine (1) according to either of the preceding claims, wherein the control unit (21) is adapted to a communication step with said external server (50) only in case that the read user information matches the user identification information associated to said communication step.

4. Beverage preparation machine (1) according to any one of the preceding claims 1,2, wherein the control unit (21) is further adapted to carry out one or more identified user-unrelated communication steps upon request by any identified or unidentified user, in particular a request communicated to said machine via a user-interface such as one or more of a user-selector, button, switch, touch pad and touch screen.

5. Beverage preparation machine (1) according to any one of the preceding claims,
comprising:
a communication module (11) for communicating with a remote server (50) via a communication network (501, 502, 511) for submitting the read user identification information to the server(50) and for receiving from the server (50) user settings associated to the user identification information, and;
the control unit (21) being further adapted to control the functionality of the machine (1) in accordance with the received user settings.

6. Beverage preparation machine according to claim 5, further comprising:
the memory (80) being for storing the received user settings together with the corresponding user identification information; and/or
a card writing arrangement adapted to write onto said card (90) the user settings received from the server (50).

7. Beverage preparation machine (1) according to any one of the preceding claims, wherein said beverage preparation machine is capsule-based and further comprises a capsule recognition arrangement,
wherein the communication module (11) is further adapted to submit the read user identification information together with the type of recognized capsule to the server (50).

8. Beverage preparation machine (1) according to any one of the preceding claims,
comprising:
the card reading arrangement (23, 24) being for reading user settings related to the beverage preparation process from a card (90);
a beverage preparation arrangement (40) for preparing a beverage, and;
the control unit (21) being further adapted to control the beverage preparation arrangement (40) in accordance with the read user settings.

9. Beverage preparation machine according to any one of the preceding claims,
wherein the card reading arrangement comprises a wireless card reader (24)

10. Beverage preparation machine according to any one of the preceding claims,
wherein the card reading arrangement comprises a card slot (23).

11. Beverage preparation machine (1) according to any one of the preceding claims,
wherein the card reading arrangement (24) comprises a radio frequency identification RFID reader.

12. Beverage preparation machine (1) according to any one of the preceding claims, which comprises a housing containing: - a beverage preparation arrangement; and - a control unit,
the card reading arrangement being connected to the control unit and located inside or outside the housing.

13. Program stored on a memory device and executable by a control unit (21) of a beverage preparation machine (1), in particular a capsule-based beverage preparation machine (1), wherein said program when being executed is arranged to perform,
the steps of
reading user identification information uniquely identifying a user from a card (90),
storing processing steps for which an authentication is necessary,
storing associations between user identification information and said processing steps of the machine (1), and
initiating execution of a stored processing step only in case of a match between the associated user identification information and the read user identification information, communicating with an external server (50) via a communication network (501, 502, 511),
storing a communication step with said external server and relating to an identified user in association with the user identification information, and
carrying out said identified user-related communication step only in case that the read user information matches the user identification information associated to said communication step.

## Patentansprüche

1. Getränkezubereitungsmaschine (1), insbesondere eine Maschine auf Kapselbasis, mit
einer Kartenleseanordnung (23,24) zum Lesen von Benutzeridentifizierungsdaten, die einen Benutzer eindeutig aus einer Karte (90) identifizieren,
einem Speicher (80) zum Speichern von Verfahrensschritten, für die eine Authentifizierung erforderlich ist, und zum Speichern von Zuordnungen zwischen den Benutzeridentifizierungsdaten und den Verfahrensschritten der Maschine (1),
einer Steuereinheit (21), die die Durchführung eines gespeicherten Verarbeitungsschrittes nur im Falle einer Übereinstimmung zwischen den zugeordneten Benutzeridentifizierungsdaten und den ausgelesenen Benutzeridentifizierungsdaten einleiten kann,
einem Übertragungsmodul (11) zum Kommunizieren mit einem externen Server (50) über ein Übertragungsnetzwerk (501, 502, 511), **dadurch gekennzeichnet, dass** in dem Speicher (80) ein Kommunikationsschritt mit dem externen Server und bezüglich eines identifizierten Benutzers in Verbindung mit den Benutzeridentifizierungsdaten gespeichert wird, und
wobei die Steuereinheit (21) in der Lage ist, den Übertragungsschritt bezüglich des identifizierten Benutzers nur auszuführen, falls die ausgelesenen Benutzerdaten mit den dem Übertragungsschritt zugeordneten Benutzeridentifizierungsdaten übereinstimmt.

2. Getränkezubereitungsmaschine (1) gemäß dem vorhergehenden Anspruch, wobei die Durchführung des Übertragungsschrittes bezüglich des identifizierten Benutzers eine Fernbestellung von dem identifizierten Benutzer in Rechnung gestellten Waren bedingt.

3. Getränkezubereitungsmaschine (1) gemäß einem der vorhergehenden Ansprüche, wobei die Steuereinheit (21) für einen Übertragungsschritt mit dem externen Server (50) nur geeignet ist, falls die ausgelesenen Benutzerdaten mit den dem Übertragungsschritt zugeordneten Benutzeridentifizierungsdaten übereinstimmen.

4. Getränkezubereitungsmaschine (1) gemäß einem der vorhergehenden Ansprüche 1, 2, wobei die Steuereinheit (21) weiterhin in der Lage ist, einen oder mehrere, nicht auf einen identifizierten Benutzer bezogene Übertragungsschritte auf Anforderung durch einen identifizierten oder nicht identifizierten Benutzer durchzuführen, insbesondere eine auf die Maschine über eine Benutzeroberfläche wie z.B. einen oder mehrere Benutzerwählschalter, Tasten, Schalter, Touchpads oder Touchscreens übertragene Anforderung.

5. Getränkezubereitungsmaschine (1) gemäß einem der vorhergehenden Ansprüche, mit:
einem Übertragungsmodul (11) zum Kommunizieren mit einem entfernten Server (50) über ein Übertragungsnetzwerk (501, 502, 511) zur Bereitstellung der ausgelesenen Benutzeridentifizierungsdaten für den Server (50) und zum Empfangen von den Benutzeridentifizierungsdaten zugeordneten Benutzereinstellungen von dem Server (50), und
wobei die Steuereinheit (21) weiterhin in der Lage ist, die Funktionsweise der Maschine (1) gemäß den empfangenen Benutzereinstellungen zu steuern.

6. Getränkezubereitungsmaschine gemäß Anspruch 5, weiterhin mit:
dem Speicher (80) zum Speichern der empfangenen Benutzereinstellungen zusammen mit den entsprechenden Benutzeridentifizierungsdaten; und/oder
einer Kartenschreibanordnung, die die von dem Server (50) empfangenen Benutzereinstellungen auf die Karte (90) schreiben kann.

7. Getränkezubereitungsmaschine (1) gemäß einem der vorhergehenden Ansprüche, wobei die Getränkezubereitungsmaschine auf Kapselbasis arbeitet und weiterhin eine Kapselerkennungsanordnung umfasst,
wobei das Übertragungsmodul (11) weiterhin in der Lage ist, dem Server (50) die ausgelesenen Benutzeridentifizierungsdaten zusammen mit der Art der erkannten Kapsel bereitzustellen.

8. Getränkezubereitungsmaschine (1) gemäß einem der vorhergehenden Ansprüche, mit:
der Kartenleseanordnung (23, 24) zum Auslesen von Benutzereinstellungen in Bezug auf den Getränkeherstellungsvorgang aus einer Karte (90);
einer Getränkezubereitungsanordnung (40) zur Zubereitung eines Getränks; und
wobei die Steuereinheit (21) weiterhin in der Lage ist, die Getränkezubereitungsanordnung (40) gemäß den ausgelesenen Benutzereinstellungen zu steuern.

9. Getränkezubereitungsmaschine gemäß einem der vorhergehenden Ansprüche, wobei die Kartenleseanordnung einen drahtlosen Kartenleser (24) umfasst.

10. Getränkezubereitungsmaschine gemäß einem der vorhergehenden Ansprüche, wobei die Kartenleseanordnung einen Kartenschlitz (23) umfasst.

11. Getränkezubereitungsmaschine (1) gemäß einem der vorhergehenden Ansprüche, wobei die Kartenleseanordnung (24) einen Funkfrequenz-Identifikations-RFID-Leser umfasst.

12. Getränkezubereitungsmaschine (1) gemäß einem der vorhergehenden Ansprüche, welche ein Gehäuse umfasst, mit: - einer Getränkezubereitungsanordnung; und - einer Steuereinheit,
wobei die Kartenleseanordnung mit der Steuereinheit verbunden ist und sich innerhalb oder außerhalb des Gehäuses befindet.

13. Programm, das auf einer Speichervorrichtung gespeichert und von einer Steuereinheit (21) einer Getränkezubereitungsmaschine (1) ausführbar ist, insbesondere einer Getränkezubereitungsmaschine (1) auf Kapselbasis, wobei das Programm während der Ausführung so eingerichtet ist, dass es die folgenden Schritte durchführt:
Auslesen von Benutzeridentifizierungsdaten, die eindeutig einen Benutzer aus einer Karte (90) identifizieren,
Speichern von Verfahrensschritten, für die eine Authentifizierung erforderlich ist, Speichern von Zuordnungen zwischen den Benutzeridentifizierungsdaten und den Verfahrensschritten der Maschine (1),
sowie
Einleiten der Ausführung eines gespeicherten Verfahrensschrittes nur im Falle einer Übereinstimmung zwischen den zugeordneten Benutzeridentifizierungsdaten und den ausgelesenen Benutzeridentifizierungsdaten,
Übertragung mit einem externen Server (50) über ein Übertragungsnetzwerk (501, 502, 511), Speichern eines Übertragungsschrittes mit dem externen Server und bezüglich eines identifizierten Benutzers in Verbindung mit den Benutzeridentifizierungsdaten, und Durchführen des Übertragungsschrittes bezüglich eines identifizierten Benutzers nur im Falle, dass die ausgelesenen Benutzerdaten mit den dem Übertragungsschritt zugeordneten Benutzeridentifizierungsdaten übereinstimmen.

## Revendications

1. Machine de préparation de boisson (1), en particulier une machine à base de capsule,
comprenant
un agencement de lecture de carte (23, 24) pour lire des informations d'identification d'utilisateur identifiant exclusivement un utilisateur à partir d'une carte (90),
une mémoire (80) pour stocker des étapes de traitement pour lesquelles une authentification est nécessaire et pour stocker des associations entre des informations d'identification d'utilisateur et lesdites étapes de traitement de la machine (1),
une unité de commande (21) adaptée pour déclencher l'exécution d'une étape stockée de traitement uniquement dans le cas d'une correspondance entre les informations d'identification d'utilisateur associées et les informations d'identification d'utilisateur lues,
un module de communication (11) pour communiquer avec un serveur externe (50) par l'intermédiaire d'un réseau de communication (501, 502, 511),
**caractérisée en ce que**
dans la mémoire (80) une étape de communication avec ledit serveur externe et se rapportant à un utilisateur identifié est stockée en association avec les informations d'identification d'utilisateur, et
dans laquelle l'unité de commande (21) est adaptée pour exécuter ladite étape de communication se rapportant à un utilisateur identifié uniquement au cas où les informations d'utilisateur lues correspondent aux informations d'identification d'utilisateur associées à ladite étape de communication.

2. Machine de préparation de boisson (1) selon la revendication précédente, dans laquelle l'exécution de ladite étape de communication se rapportant à un utilisateur identifié implique une commande à distance de biens à la charge dudit utilisateur identifié.

3. Machine de préparation de boisson (1) selon l'une des revendications précédentes, dans laquelle l'unité de commande (21) est adaptée pour une étape de communication avec ledit serveur externe (50) uniquement au cas où les informations d'utilisateur lues correspondent aux informations d'identification d'utilisateur associées à ladite étape de communication.

4. Machine de préparation de boisson (1) selon l'une quelconque des revendications précédentes 1, 2, dans laquelle l'unité de commande (21) est en outre adaptée pour exécuter une ou plusieurs étapes de communication ne se rapportant pas à un utilisateur identifié sur demande de n'importe quel utilisateur identifié ou non-identifié, en particulier une demande communiquée à ladite machine par l'intermédiaire d'une interface utilisateur comme par exemple un ou plusieurs éléments parmi un sélecteur utilisateur, un bouton, un commutateur, un pavé tactile et un écran tactile.

5. Machine de préparation de boisson (1) selon l'une quelconque des revendications précédentes,
comprenant :
un module de communication (11) pour communiquer avec un serveur distant (50) par l'intermédiaire d'un réseau de communication (501, 502, 511) pour transmettre au serveur (50) les informations d'identification d'utilisateur lues et pour recevoir du serveur (50) des paramètres utilisateur associés aux informations d'identification d'utilisateur, et
l'unité de commande (21) étant en outre adaptée pour commander le mode de fonctionnement de la machine (1) conformément aux paramètres utilisateur reçues.

6. Machine de préparation de boisson selon la revendication 5, comprenant en outre :
la mémoire (80) étant destinée à stocker les paramètres utilisateur reçues ainsi que les informations d'identification d'utilisateur correspondantes ; et/ou
un agencement d'écriture de carte adapté pour écrire sur ladite carte (90) les paramètres utilisateur reçus du serveur (50).

7. Machine de préparation de boisson (1) selon l'une quelconque des revendications précédentes, ladite machine de préparation de boisson étant à base de capsule et comprenant en outre un agencement de reconnaissance de capsule,
dans laquelle le module de communication (11) est en outre adapté pour transmettre au serveur (50) les informations d'identification d'utilisateur lues ainsi que le type de capsule reconnue.

8. Machine de préparation de boisson (1) selon l'une quelconque des revendications précédentes,
comprenant :
l'agencement de lecture de carte (23, 24) étant destiné à lire des paramètres utilisateur se rapportant au procédé de préparation de boisson à partir d'une carte (90) ;
un agencement de préparation de boisson (40) destiné à préparer une boisson, et l'unité de commande (21) étant en outre adaptée pour commander l'agencement de préparation de boisson (40) conformément aux paramètres utilisateur lus.

9. Machine de préparation de boisson selon l'une quelconque des revendications précédentes,
dans laquelle l'agencement de lecture de carte comprend un lecteur de carte sans fil (24).

10. Machine de préparation de boisson selon l'une quelconque des revendications précédentes,
dans laquelle l'agencement de lecture de carte comprend un logement de carte (23).

11. Machine de préparation de boisson (1) selon l'une quelconque des revendications précédentes,
dans laquelle l'agencement de lecture de carte (24) comprend un lecteur RFID d'identification par radiofréquence.

12. Machine de préparation de boisson (1) selon l'une quelconque des revendications précédentes, qui comprend un boîtier contenant :
- un agencement de préparation de boisson ; et
- une unité de commande,
l'agencement de lecture de carte étant relié à l'unité de commande et situé à l'intérieur ou à l'extérieur du boîtier.

13. Programme stocké sur un dispositif de mémoire et exécutable par une unité de commande (21) d'une machine de préparation de boisson (1), en particulier une machine de préparation de boisson à base de capsule (1), ledit programme étant agencé pour effectuer, lorsqu'il est exécuté, les étapes consistant à lire des informations d'identification d'utilisateur identifiant exclusivement un utilisateur à partir d'une carte (90),
stocker des étapes de traitement pour lesquelles une authentification est nécessaire,
stocker des associations entre des informations d'identification d'utilisateur et lesdites étapes de traitement de la machine (1), et
déclencher l'exécution d'une étape de traitement stockée uniquement dans le cas d'une correspondance entre les informations d'identification d'utilisateur associées et les informations d'identification d'utilisateur lues,
communiquer avec un serveur externe (50) par l'intermédiaire d'un réseau de communication (501, 502, 511),
stocker une étape de communication avec ledit serveur externe et se rapportant à un utilisateur identifié en association avec les informations d'identification d'utilisateur, et
exécuter ladite étape de communication se rapportant à un utilisateur identifié uniquement au cas où les informations d'utilisateur lues correspondent aux informations d'identification d'utilisateur associées à ladite étape de communication.
